# EUROPEAN PATENT APPLICATION

(11) **EP 3 496 021 A1**
(43) Date of publication of application: **12.06.2019**
(21) Application number: 18181161.3
(22) Date of filing: 02.07.2018
(51) Int. Cl.: G06Q 20/28, G06Q 20/32, G06Q 20/36

(54) **MOBILE TERMINAL AND METHOD FOR CONTROLLING SAME**

(30) Priority: 07.12.2017 KR 20170167678
(71) Applicant: LG Electronics Inc., Yeongdeungpo-gu Seoul 07336 (KR)
(72) Inventor: LEE, Sookyeong, 06772 Seoul (KR); KIM, Hyehyun, 06772 Seoul (KR); LEE, Taekon, 06772 Seoul (KR); CHOI, Younhwa, 06772 Seoul (KR)
(74) Representative: Beyer, Andreas

(57) **Abstract**

Disclosed are a mobile terminal and a method of controlling the same. In the mobile terminal, when battery off is detected, a predetermined card is recharged with a predetermined amount before a super-power saving payment mode is entered. Furthermore, when the amount of remaining battery power is a specific threshold or more, the super-power saving payment mode is terminated and a recharged amount is refunded. An amount of a recharged amount used for payment in the super-power saving payment mode may be subjected to deferred payment. Accordingly, a mobile payment function can be smoothly performed in an emergency situation in which the battery is off. Furthermore, in the super-power saving payment mode, security can be enhanced through a local authentication method.

## Description

### CROSS REFERENCE TO RELATED APPLICATION

This application claims the benefit of earlier filing date and right of priority to Korean Patent Application No. 10-2017- 0167678 filed on December 17, 2017, the contents of which are hereby incorporated by reference in its entirety.

### BACKGROUND OF THE INVENTION

### Field of the Invention

The present invention relates to a mobile terminal and, more particularly, to a mobile terminal capable of implementing a mobile payment function and a method of controlling the same.

### Discussion of the Related Art

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

Efforts are ongoing to support and increase the functionality of mobile terminals. Such efforts include software and hardware improvements, as well as changes and improvements in the structural components.

User authentication information has recently been stored in a portable terminal to use online/offline payments. For example, credit card information is stored in the portable terminal, so the portable terminal is used as a credit card although a separate credit card is not carried.

Accordingly, when a credit card function is installed in the portable terminal, a payment function can be performed through the portable terminal using various communication methods. It is thus necessary to increase user convenience of the portable terminal in conjunction with various functions that may be implemented through the portable terminal.

In this case, in order to perform the payment function using the portable terminal, data communication with an external server is necessary. To this end, the amount of remaining battery power of the portable terminal needs to maintain a specific value or more. However, if the amount of remaining battery power is not sufficient and separate charging means is not present, a conventional mobile payment method has a limit in performing the payment function. Accordingly, there is a need for a method capable of normally performing a mobile payment function in such a situation.

### Summary of the Invention

Accordingly, an object of the present invention is to address the above-noted and other problems.

An object of the present invention is to provide a mobile terminal providing a user interface in which a user can control the mobile terminal easily and efficiently and a method of controlling the same.

An object of the present invention is to provide a mobile terminal capable of performing a normal mobile payment function even in an emergency situation by changing a payment mode based on the amount of remaining battery power of the mobile terminal, and a method of controlling the same.

Furthermore, an object of the present invention is to provide a mobile terminal capable of normally performing a mobile payment function in a situation in which a battery has been off by providing a mobile payment mode that belongs to a common payment mode and a super-power saving payment mode and that has been optimized for the environment in which the mobile terminal is used based on the amount of remaining battery power of the mobile terminal, and a method of controlling the same.

Furthermore, an object of the present invention is to provide a mobile terminal capable of normally performing a mobile payment function although the network connection state of the mobile terminal is terminated in the super-power saving payment mode (or minimum payment mode), and a method of controlling the same.

Furthermore, an object of the present invention is to provide a mobile terminal capable of performing a mobile payment function having improved security through a local authentication method in the super-power saving payment mode (or minimum payment mode), and a method of controlling the same.

In an aspect, a mobile terminal includes a display, a power supply unit, a communication unit configured to access a payment server over a network, a near field communication (NFC) module, a payment information storage unit configured to store payment-related information and to perform communication with a payment terminal through the NFC module, and a controller configured to selectively apply any one of a first payment mode in which payment is performed through communication with the payment server and a second payment mode in which the payment is performed based on the payment-related information stored in the payment information storage unit. The controller is configured to enter the second payment mode when at least one of the state in which the amount of remaining battery power of the power supply unit is a predetermined threshold or less and the state in which the network has not been connected is detected. In this case, the controller enables an amount available in the second payment mode to be automatically recharged through predetermined charging means before the second payment mode is entered.

The mobile terminal further includes a trusted execution environment (TEE) processor configured to be different from the controller and to provide an authentication interface for local authentication. The controller may perform authentication through the authentication interface provided by the TEE processor when the second payment mode is entered.

The controller may be configured to change an authentication method from an authentication method through a fast identity online (FIDO) server to an authentication method through the authentication interface provided by the TEE processor when the first payment mode switches to the second payment mode.

The authentication interface may include a region in which a preset fin number is entered.

The controller may be configured to terminate the second payment mode when an authentication error attributable to the misspelling of the preset fin number exceeds a predetermined number.

The state in which the amount of remaining battery power is the predetermined value or less may include the state in which power supplied to the mobile terminal through the power supply unit is off.

The controller may be configured to perform control so that the mobile terminal operates in an always on display (AOD) mode in which specific information is displayed on the display in the state in which power has not been supplied to the display and to perform control so that information including the recharged amount in the second payment mode is displayed on the display in the AOD mode.

The information displayed in the AOD mode may further include a time during which payment is possible using the current amount of remaining battery power and membership information related to a predetermined credit card.

The controller may be configured to perform control so that the amount is recharged prior to the release of the connection of the network before the second payment mode is entered.

The controller may be configured to terminate the second payment mode when the amount of remaining battery power exceeds the threshold in the state in which the second payment mode has been entered.

The controller may be configured to refund the recharged amount to the predetermined charging means when the second payment mode is terminated.

The controller may be configured to refund the amount of the recharged amount except a payment amount to the recharging means when the second payment mode is terminated in the state in which payment has been performed using the recharged amount in the second payment mode.

The controller may be configured to perform control so that the payment using the recharged amount is blocked when the second payment mode is terminated.

The payment information storage unit may be included in a USIM card or a micro SD card and provided in a form detachable from the mobile terminal or a form embedded in the mobile terminal.

The first payment mode may include a payment mode based on an NFC host card emulator (HCE) method or a magnetic secure transmission (MST) method. The second payment mode may include a payment mode based on an NFC secure element (SE) method.

When a second payment mode menu is selected while the mobile terminal operates in the first payment mode, the controller may be configured to perform control so that the second payment mode is entered regardless of the state of the amount of remaining battery power and the connection state of the network.

The display may be implemented as a plastic OLED (POLED).

The payment-related information stored in the payment information storage unit may include payment app information and credit card information to be applied to payment in the second payment mode.

The mobile terminal and the method of controlling the mobile terminal according to embodiments of the present invention have the following advantages.

In accordance with an embodiment of the present invention, a normal mobile payment function can be performed in an emergency situation based on a different payment mode depending on the amount of remaining battery power of the mobile terminal. That is, normal mobile payment can be performed even in the situation in which the battery has been off.

Furthermore, in accordance with an embodiment of the present invention, a mobile payment function can be normally performed even in the situation in which the battery has been off because a mobile payment mode belonging to the common payment mode and the super-power saving payment mode and optimized for an environment in which the mobile terminal is used based on the amount of remaining battery power of the mobile terminal is provided.

Furthermore, in accordance with an embodiment of the present invention, a mobile payment function can be normally performed although the network connection state of the mobile terminal is terminated in the super-power saving payment mode (or minimum payment mode).

Furthermore, in accordance with an embodiment of the present invention, a mobile payment function having enhanced security can be performed through a local authentication method in the super-power saving payment mode (or minimum payment mode).

Furthermore, in accordance with at least one of the embodiments of the present invention, there is an advantage in that a user's preference for an image photographed in the always on camera mode can be easily incorporated into a database.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

With the mobile terminal and the method of controlling the same according to the present invention, the following effects are obtained.

### Brief Description of the Drawings

The present invention will become more fully understood from the detailed description given herein below and the accompanying drawings, which are given by illustration only, and thus are not limitative of the present invention, and wherein:
FIG. 1 is a block diagram of a mobile terminal in accordance with the present disclosure.
FIG. 2 is a diagram showing the configuration of a mobile payment system using the mobile terminal according to an embodiment of the present invention.
FIG. 3 is a diagram for schematically illustrating a payment method using the mobile terminal according to an embodiment of the present invention.
FIG. 4 is a flowchart illustrating a method of controlling the mobile terminal according to an embodiment of the present invention.
FIG. 5 is a diagram for illustrating payment modes available based on an NFC setting mode in association with a battery source.
FIG. 6 is a schematic block diagram for illustrating a first payment mode and a second payment mode according to an embodiment of the present invention.
FIGS. 7A to 7C are examples of the block diagram of the mobile terminal for implementing a function for selectively applying a plurality of payment modes according to an embodiment of the present invention.
FIG. 8 is a flowchart illustrating a process of performing local authentication in a super-power saving payment mode (second payment mode) according to an embodiment of the present invention.
FIG. 9 is a flowchart illustrating a method of controlling the mobile terminal when the super-power saving payment mode is terminated according to an embodiment of the present invention.
FIG. 10 is a diagram for illustrating a process of implementing the first payment mode and the second payment mode in the payment system environment shown in FIG. 2 in accordance with an embodiment of the present invention.
FIG. 11 is a diagram illustrating a setting method for performing payment in a minimum payment mode according to an embodiment of the present invention.
FIG. 12 is a diagram for illustrating an example of a screen configuration when the minimum payment mode is entered according to an embodiment of the present invention.
FIGS. 13 and 14 are diagrams for illustrating an example of an authentication interface provided in a TEE region in the minimum payment mode according to an embodiment of the present invention.
FIG. 15 is a diagram for illustrating an example of a screen configuration when the minimum payment mode is terminated according to an embodiment of the present invention.
FIG. 16 is a diagram for illustrating another example in which the first payment mode and the second payment mode (minimum payment mode) are switched according to an embodiment of the present invention.

### Detailed Description of the Embodiments

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "have" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (e.g., smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

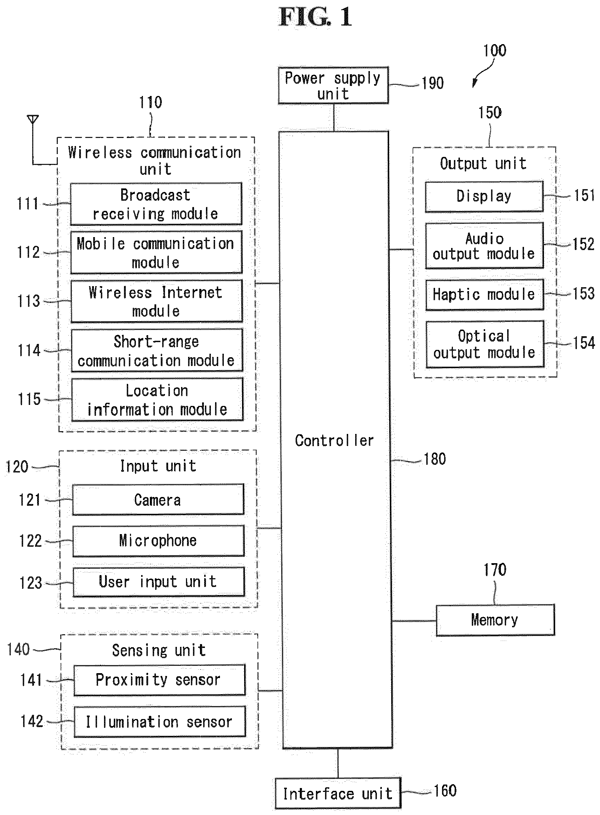

FIG. 1 is a block diagram of a mobile terminal in accordance with the present disclosure.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 1, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (e.g., a touch key, a push key, a mechanical key, a soft key, and the like) for allowing a user to input information. Data (e.g., audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1, the sensing unit 140 is shown having a proximity sensor 141 and an illumination sensor 142.

If desired, the sensing unit 140 may alternatively or additionally include other types of sensors or devices, such as proximity sensor 141, illumination sensor 142, a touch sensor, an acceleration sensor 144, a magnetic sensor, a G-sensor, a gyroscope sensor 143, a motion sensor, an RGB sensor, an infrared IR sensor, a force sensor 145, a finger scan sensor, a ultrasonic sensor, an optical sensor (e.g., camera 121), a microphone 122, a battery gauge, an environment sensor (e.g., a barometer, a hygrometer, a thermometer, a radiation detection sensor, a thermal sensor, and a gas sensor, among others), and a chemical sensor (e.g., an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (e.g., receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in FIG. 1, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1a, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (e.g., Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (e.g., a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (e.g., distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS, etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various types of information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (e.g., phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 may also perform the controlling and processing associated with voice calls, data communications, video calls, and the like, or may perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provides internal power and supplies power required suitable for driving elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Hereinafter, embodiments related to a control method that may be implemented in the mobile terminal configured as above are described with reference to the accompanying drawings. It is evident to those skilled in the art that the present invention may be implemented in other specific forms without departing from the spirit and essential characteristics of the present invention.

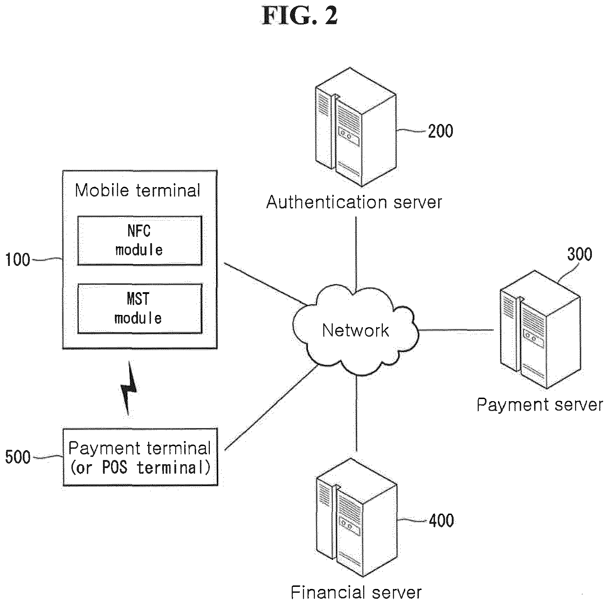

FIG. 2 is a diagram showing the configuration of a mobile payment system using the mobile terminal according to an embodiment of the present invention.

Referring to FIG. 2, the mobile payment system may include the mobile terminal 100, an authentication server 200, a payment server 300, a financial server 400 and a payment terminal (or POS terminal) 500. The elements of the payment system shown in FIG. 2 may be interconnected over a network. For example, the mobile terminal 100, the authentication server 200, the payment server 300, and the financial server 400 may be interconnected over a mobile communication network or through the Internet. Furthermore, for example, the mobile terminal 100 and the POS terminal 500 may be interconnected over a short-distance communication network, for example, near field communication (NFC), wireless-fidelity (Wi-Fi) or magnetic secure transmission (MST).

The mobile terminal according to an embodiment of the present invention may perform a process for payment information registration and deletion or user authentication necessary for a payment process using the mobile payment system. Furthermore, the user authentication may be performed using a local authentication method provided in a trusted execution environment (TEE) included in the mobile terminal other than an external server. In this document, the trusted execution environment is hereinafter referred to as a "TEE."

The mobile terminal 100 may be a device that is used by a user when the user attempts to perform mobile payment according to an embodiment of the present invention. The user may perform payment online/offline using the mobile terminal 100.

For example, the mobile terminal 100 may provide a payment service using a payment app (e.g., LG Pay Application). The payment app may provide a user interface related to payment. The payment app may provide a user interface related to card registration, payment or transaction. Furthermore, the payment app may provide an authentication interface related to user authentication.

The mobile terminal 100 may store card information or payment account information associated with a payment service account (e.g., LG account), a bio authentication service account or a user account.

The mobile terminal 100 may perform user authentication through an authentication process. The authentication process may be a bio authentication method based on a user's bio information or the authentication process may be a preset fin number entry method.

The mobile terminal 100 may request a payment token from the payment server 300, and may perform mobile payment using the payment token issued by the financial server 500.

The mobile terminal 100 according to an embodiment of the present invention may operate in a common payment mode (or first payment mode) in which mobile payment is performed through a process of transmitting/receiving information necessary for payment with the authentication server 200, the payment server 300 and the financial server 400 connected thereto over a network. Furthermore, the mobile terminal 100 may perform a mobile payment function in the state in which a connection with a network has been off. For example, when the power supply state of the mobile terminal 100 is a super-power saving mode or a situation in which the battery has been off, the mobile terminal may enter the super-power saving payment mode (or second payment mode) although a network connection is impossible, and may perform a mobile payment function. A condition in which the mobile terminal enters the second payment mode is described later.

The authentication server 200 may perform user authentication in response to a request from the mobile terminal 100. For example, the authentication server 200 may provide a fast identity online (FIDO) authentication service that performs user authentication using a user's bio information. Furthermore, for example, the authentication server 200 may perform user authentication using authentication information received from the mobile terminal 100.

The payment server 300 may transmit/receive information to/from the mobile terminal 100 and the financial server 400. The payment server 300 may manage card information or account information associated with a payment service account (e.g., LG Account), a bio authentication service account and a user account. When a payment token is requested by the mobile terminal 100, the payment server 300 may request the payment token from the financial server 400. The payment server 300 may transfer the payment token received from the financial server 500 to the mobile terminal 100.

The financial server 400 may be server managed by a card company or a bank. The financial server 400 may issue a card and manage card information (or account information). Furthermore, the financial server 400 may generate a payment token. When a payment token request is received from the payment server 300, the financial server 400 may identify whether a user has been authenticated by the authentication server 200.

The financial server 400 may recharge a predetermined account with a predetermined amount before it enters the super-power saving payment mode (or minimum payment mode or second payment mode) according to an embodiment of the present invention. The super-power saving payment mode, the minimum payment mode, the emergency payment mode, and the second payment mode used in this document are the same mode, and may be interchangeably used.

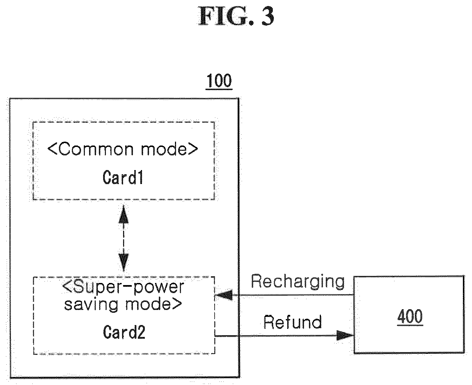

FIG. 3 is a diagram for schematically illustrating a payment method using the mobile terminal according to an embodiment of the present invention.

Referring to FIG. 3, the mobile terminal 100 may select any one of the common mode (first payment mode) and the super-power saving payment mode (second payment mode) in order to perform a mobile payment function, may enter the selected mode, and may perform the mobile payment function. A payment mode that belongs to the two payment modes and that has been optimized for a source environment may be applied by taking into consideration of the source environment of the mobile terminal 100.

In the first payment mode, mobile payment may be performed using a first card predetermined by a user. In the second payment mode, mobile payment may be performed using a second card predetermined by a user. In both the first card and the second card, payment-related information may be managed through the financial server 400.

In the first payment mode, a payment function is performed through data communication with at least one unit connected over a network as described above. In the second payment mode, data communication with the at least one unit shown in FIG. 2 cannot be used in the state in which a network connection has been off. Accordingly, when a condition in which the mobile terminal 100 enters the second payment mode is satisfied according to an embodiment of the present invention, the predetermined second card may be automatically recharged with a predetermined amount from the financial server 400 before the mobile terminal enters the second payment mode. Accordingly, a user may enter the second payment mode even in the situation in which the battery has been off, and may perform mobile payment using the recharged amount. Furthermore, if the battery of the mobile terminal 100 has been sufficiently recharged and a source environment in which a payment function can be performed in the first payment mode is provided, the payment mode of the mobile terminal 100 may switch to the first payment mode, and the mobile terminal may refund the recharged amount to the financial server 400 again.

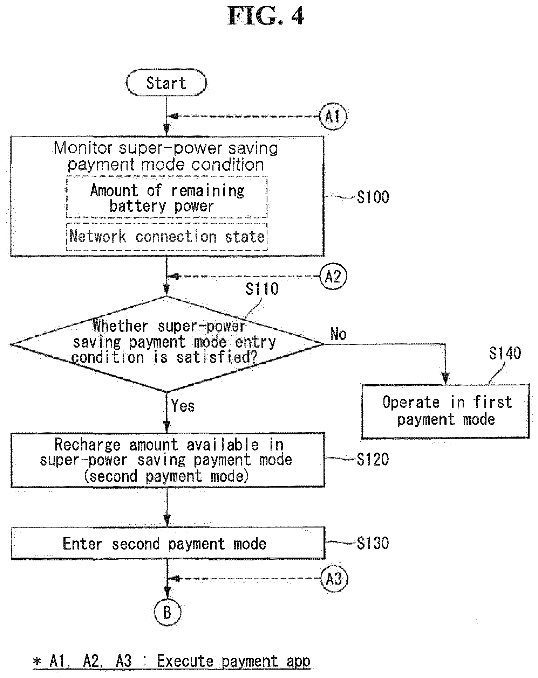

FIG. 4 is a flowchart illustrating a method of controlling the mobile terminal according to an embodiment of the present invention.

Referring to FIG. 4, the controller 180 of the mobile terminal 100 may monitor a condition in which the mobile terminal 100 enters the minimum payment mode based on state information of the mobile terminal (S100).

The state information of the mobile terminal 100 may include at least one of the amount of remaining battery power and a network connection state. The minimum payment mode entry condition may mean a case where the amount of remaining battery power of the mobile terminal 100 is small to the extent that mobile payment cannot be performed, the battery is an off state, the amount of remaining battery power is very small, or a network connection state is off due to power-off of the battery. For example, the minimum payment mode entry condition may further include a case where the amount of remaining battery power is sufficient, but a network connection state is off.

The monitoring operation may be performed when a payment app is executed (A1).

The controller 180 may determine whether the mobile terminal 100 satisfies the minimum payment mode entry condition (S110) based on a result of the monitoring of the minimum payment mode entry condition.

If, as a result of the determination, it is determined that the mobile terminal 100 does not satisfy the minimum payment mode entry condition (S110:N), the controller 180 controls the mobile terminal so that it operates in the first payment mode (S140). If a payment app is executed and the mobile terminal operates in the first payment mode, the controller 180 may maintain the first payment mode so that mobile payment is performed in the first payment mode.

If, as a result of the determination, it is determined that the mobile terminal 100 satisfies the minimum payment mode entry condition (S110:YES), the controller 180 may control the mobile terminal so that it is recharged with a specific amount available in the minimum payment mode before the mobile terminal enters the minimum payment mode (S120, S130).

The recharging of the specific amount may be controlled so that a predetermined credit card (or account) is recharged with the specific amount from the financial server 400.

The controller 180 controls the mobile terminal so that it enters the minimum payment mode (second payment mode) when the recharging of the specific amount is completed.

In an embodiment of the present invention, if a source environment, such as the amount of remaining battery power or network connection state of the mobile terminal 100, does not satisfy a minimum source necessary for mobile payment, the mobile terminal needs to automatically switch to the minimum payment mode. The operation of monitoring whether the minimum payment mode entry condition is satisfied may be performed regardless of the execution of a payment app (A2, A3). That is, the controller 180 may always confirm the amount of remaining battery power and a network connection state, and may first recharge a predetermined amount from the financial server when the amount of remaining battery power is less than a predetermined threshold. This may mean a case where the payment mode of the mobile terminal 100 switches to the second payment mode regardless of a user's intention to use a mobile payment function.

However, an embodiment of the present invention is not limited to the above case. For example, when a payment app for mobile payment is executed, the minimum payment mode entry condition may be monitored and whether the entry condition is satisfied may be determined (A1).

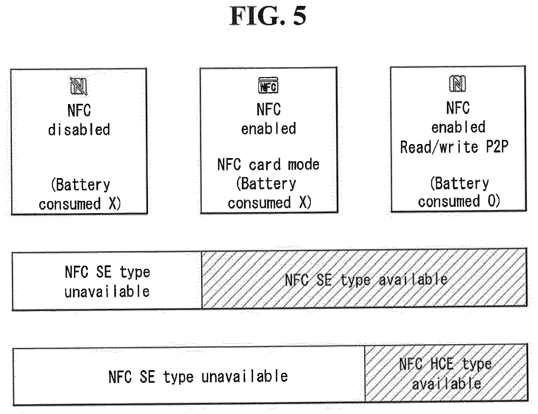

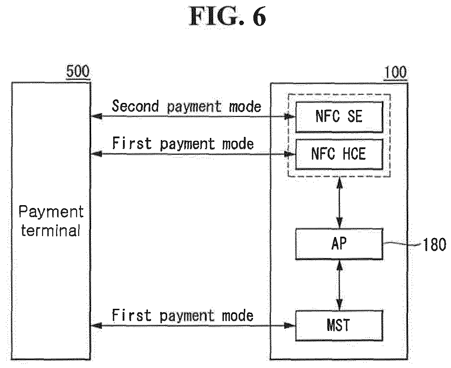

FIG. 5 is a diagram for illustrating payment modes available based on an NFC setting mode in association with a battery source. FIG. 6 is a schematic block diagram for illustrating the first payment mode and the second payment mode according to an embodiment of the present invention.

Referring to FIG. 5, an NFC method may be applied to the first payment mode and the second payment mode according to an embodiment of the present invention. For example, mobile payment may be performed through short-distance communication with the POS terminal through the NFC module of the mobile terminal 100.

In the NFC method, an available NFC payment method may be different depending on an NFC setting mode.

A peer-to-peer mode (P2P mode) and a read/write mode are modes for recognizing various NFC tags, and may be used to recognize a tag or to transmit/receive a file. NFC host card emulation (HCE) is available in an NFC P2P mode and a read/write mode. These modes are available when the amount of remaining battery power of the mobile terminal 100 is a specific level or more because the battery is consumed. In the NFC card mode, a secure element (SE) is enabled to activate the NFC card emulation. In general, the NFC card mode may be used for a transportation card. In the NFC card mode, the battery is not consumed.

In the second card mode, mobile payment can be performed normally only when the NFC card mode is activated. This means that the NFC SE method is applied to the second card mode.

In this case, the secure element (SE) is a physical (hardware) region in which payment-related information is stored. Card information can be exchanged the payment terminal through the NFC module (NFC antenna). That is, the NFC SE method means a method of performing mobile payment using payment-related information stored in the SE region. In this document, the SE may also be called a payment information storage unit.

The payment-related information may include at least one of a card number, a valid card date, CVC, and the telephone number, address and account information of a user.

The first card mode means a mode in which mobile payment is performed in the state in which the NFC mode is P2P and the read/write mode has been activated. The NFC HCE method is not applied to the first card mode. The NFC HCE means that NFC payment and other secure services may be provided without using a physical secure element.

As described above, in accordance with an embodiment of the present invention, the first payment mode may mean a payment mode using the NFC HCE method, and the second payment mode may mean a payment mode using the NFC SE method. However, the present invention is not limited thereto. For example, the MST method of mobile payment methods may also be classified as the first payment mode and applied. That is, in order to apply the MST method, the amount of remaining battery power of the mobile terminal must maintain a specific level or more. The MST method may be classified as the same category as the first payment mode.

Accordingly, referring to FIG. 6, the controller 180 may control the mobile terminal so that it operates in the first payment mode in the state in which the amount of remaining battery power of the mobile terminal 100 is a specific level or more and a network has been connected, and may perform a mobile payment function through communication with the POS terminal using the NFC HCE method or the MST method.

Furthermore, if the amount of remaining battery power of the mobile terminal 100 is less than a specific level or a network connection is off, the controller 180 may control the mobile terminal so that it operates in the second payment mode and performs a mobile payment function by exchanging payment-related information with the POS terminal using the NFC SE method.

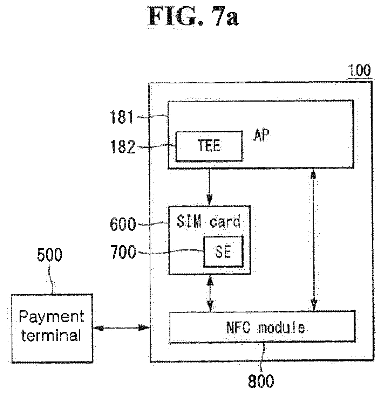

A schematic block diagram of the mobile terminal, including the SE region classified as a physical region and the TEE region in which local authentication is performed in the super-power saving mode according to an embodiment of the present invention, is described more specifically with reference to FIGS. 7A to 7C.

FIGS. 7A to 7C are examples of the block diagram of the mobile terminal for implementing a function for selectively applying a plurality of payment modes according to an embodiment of the present invention.

Referring to FIG. 7A, the mobile terminal 100 includes an app processor (AP) 181, an SIM card 600, and an NFC module 800.

The app processor 181 may include a payment app for communicating with the NFC module 800.

An SE 700 according to an embodiment of the present invention is embedded in the SIM card 600.

Furthermore, a TEE 182 is a memory included in the app processor 181, that is, the main processor of the mobile terminal 100, and may correspond to a memory region accessible to the processor when it operates in a secure mode. The TEE 182 may be positioned in the secure region of the hardware protection partition of a system on chip (SoC). The TEE 182 is an isolated environment executed in parallel to the operating system of the mobile terminal 100, and may provide secure services, such as a mobile payment function. In accordance with an embodiment of the present invention, the TEE 182 may provide an authentication interface in which local authentication can be executed not an external authentication server while a payment app is executed in the super-power saving payment mode.

If mobile payment is performed in the super-power saving payment mode, the TEE 182 provides the authentication interface for user authentication. The authentication interface may be an interface for entering a fin number.

When the user authentication is completed, payment-related information stored in the SE region 700 may be transmitted to the payment terminal 500 through an NFC antenna included in the NFC module 800.

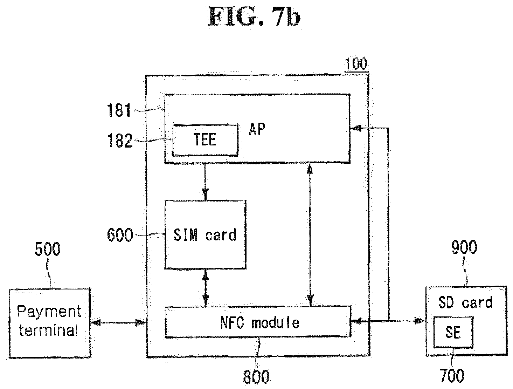

Referring to FIG. 7B, the SE 700 is stored in an SD card 900. Although not shown, the SD card 900 may further include a memory and controller capable of communicating with the SE 700. The NFC module 800 may communicate with the SD card 900 in order to receive payment-related information stored in the SE 700.

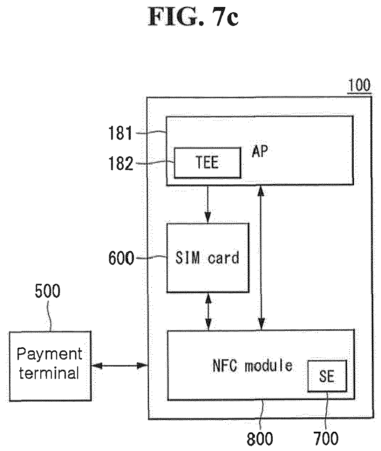

Referring to FIG. 7C, the SE 700 may be embedded in the NFC module 800. In this case, the NFC module 800 does not need separate data communication with the SIM card 600 in order to receive payment-related information in the super-power saving payment mode.

The configuration (SE) for storing payment-related information, the configuration (TEE) for providing an authentication interface for local authentication, and a schematic association configuration with the NFC module in the super-power saving payment mode applied to an embodiment of the present invention have been described above with reference to FIGS. 7A to 7C.

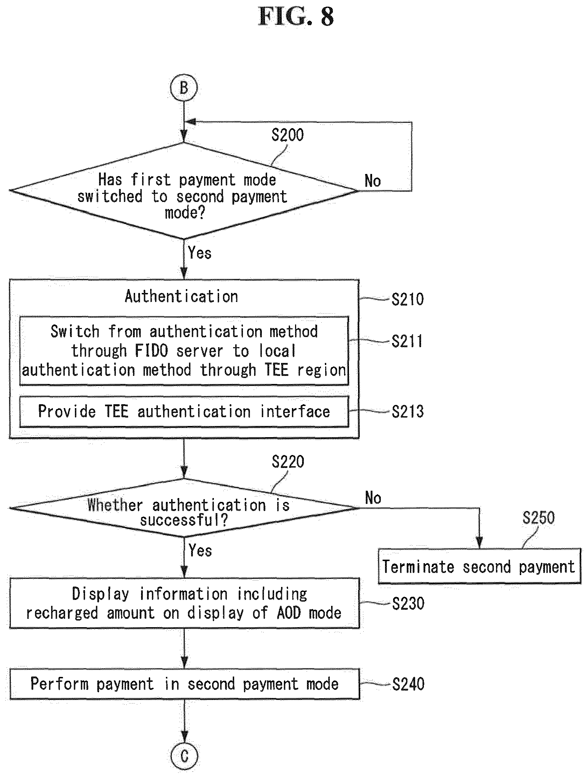

FIG. 8 is a flowchart illustrating a process of performing local authentication in the super-power saving payment mode (second payment mode) according to an embodiment of the present invention.

Referring to FIG. 8, the controller 180 may determine whether a mobile payment mode switches from the first payment mode to the second payment mode (S200).

If, as a result of the determination, it is determined that the mobile payment mode has switched from the first payment mode to the second payment mode, the controller 180 may also change a user authentication method. For example, in the first payment mode, the controller 180 may transmit a user's bio information to an external FIDO server and perform user authentication through the FIDO server.

If the first payment mode has switched from the second payment mode, the controller 180 may change an authentication method from an authentication method through the FIDO server to a local authentication method through a TEE region (S211).

Furthermore, the controller 180 may display the authentication interface, provided by the TEE, on the display 151 (S213). The authentication interface may include a fin number entry region.

In this case, the display 151 may operate in an always on display (AOD) mode in which specific information can be displayed in the state in which power has not been supplied to the display. The controller 180 may provide an AOD display with all of payment-related operations performed in the super-power saving payment mode.

The display 151 may be implemented as a plastic OLED (POLED). The controller 180 can secure maximum brightness for payment-related information provided to the display in the super-power saving payment mode through the POLED display.

When authentication is successfully completed in the authentication process through the TEE authentication interface, the controller 180 may display information, including a recharged amount, on the display 151 of the AOD mode (S230).

The recharged amount is an amount recharged from the financial server to a predetermined card (e.g., a credit card or an account) right before the mobile terminal enters the super-power saving payment mode (right before a network connection is terminated).

The controller 180 may perform payment without a network connection in the super-power saving payment mode (second payment mode) using the recharged amount (S240).

If authentication fails in the authentication process through the TEE authentication interface, the controller 180 may terminate the super-power saving payment mode (second payment mode) (S250). That is, in the super-power saving payment mode, payment is performed using a temporarily recharged amount. Accordingly, when TEE authentication fails, the second payment mode may be forcedly terminated in order to prevent the recharged amount from being used. Furthermore, when the TEE authentication fails, the controller 180 may maintain the second payment mode and perform control so that the use of the recharged amount is blocked.

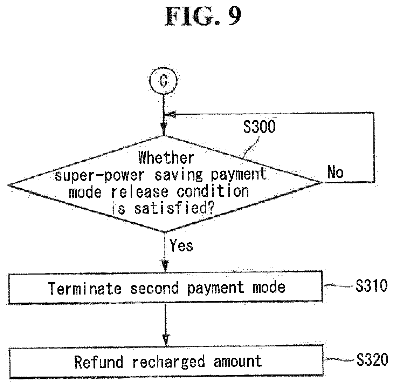

FIG. 9 is a flowchart illustrating a method of controlling the mobile terminal when the super-power saving payment mode is terminated according to an embodiment of the present invention.

Referring to FIG. 9, the controller 180 may determine whether a super-power saving payment mode (second payment mode) release condition is satisfied while the mobile terminal 100 operates in the super-power saving payment mode (S300).

If, as a result of the determination, it is determined that the mobile terminal satisfies the second payment mode release condition, the controller 180 may terminate the second payment mode (S310).

The super-power saving payment mode release condition may mean the state in which the mobile terminal 100 can operate in the first payment mode when the amount of remaining battery power of the mobile terminal 100 is a predetermined value or more or a network connection is possible. For example, the battery may be recharged to have a specific capacity or more in the state in which the battery of the mobile terminal has been off and thus the mobile terminal has entered the second payment mode. In this case, the controller 180 may terminate the second payment mode and switch to the first payment mode. Furthermore, when an external charging device is connected in the second payment mode, the controller 180 may terminate the second payment mode regardless of the amount of remaining battery power, and may switch to the first payment mode.

When the second payment mode is terminated, the controller 180 may process a recharged amount so that it is refunded (S320).

When the second payment mode is terminated and the first payment mode is entered, the controller 180 may refund the recharged amount back to the financial server. In this case, the controller 180 may perform refund processing in order to prevent unauthorized use of the recharged amount even before a specific network is connected after the second payment mode is terminated. Furthermore, the controller 180 may display a message, indicating that the refund of the recharged amount has been completed, on the display 151.

If some of the recharged amount has been used for payment in the second payment mode, the controller 180 may refund the remaining amount of the recharged amount except the some amount. If the total amount of the recharged amount has been used for payment, the controller may not separately perform refund processing. In this case, the controller may display a message, indicating that the total amount of the recharged amount has been used and a refund amount is not present, on the display 151.

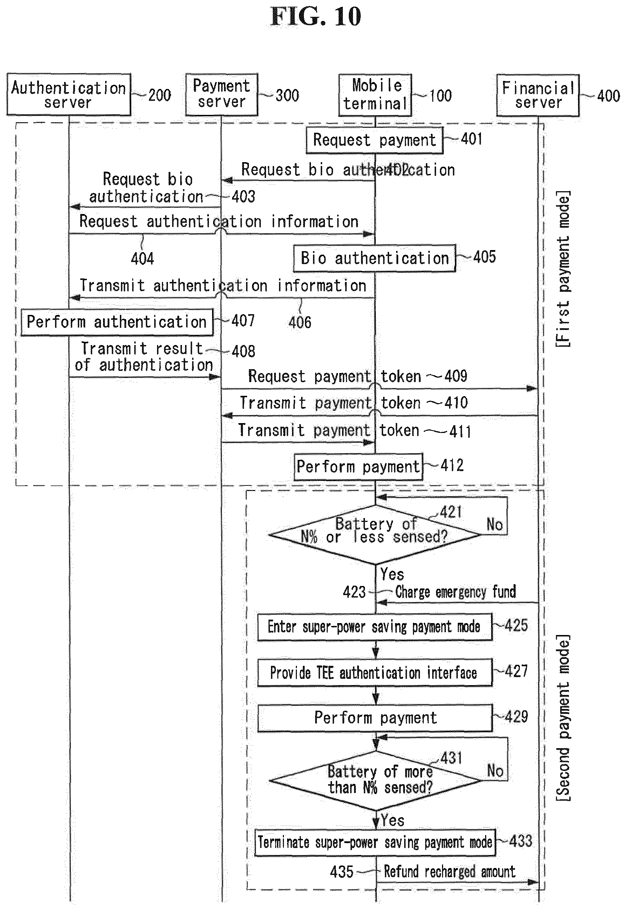

FIG. 10 is a diagram for illustrating a process of implementing the first payment mode and the second payment mode in the payment system environment shown in FIG. 2 in accordance with an embodiment of the present invention.

Referring to FIG. 10, the mobile terminal 100 performs mobile payment through data communication with the authentication server 200, the payment server 300, and the financial server 400 in the first payment mode. Furthermore, the mobile terminal 100 performs mobile payment even in the state in which the mobile terminal has not been connected to the authentication server 200, the payment server 300, and the financial server 400 over a network other than a process of recharging a recharged amount from the financial server 400 right before the mobile terminal enters the second payment mode.

A data flow in which mobile payment is performed in the first payment mode and the second payment mode is described below.

The controller 180 may perform a payment request in the first payment mode (S401). The payment request may be performed when a payment app is executed.

When the payment app is executed, the controller 180 may request bio authentication from the payment server 300 for user authentication (S402). The payment server 300 may request bio authentication from the authentication server 200 (S403). The authentication server 200 may request authentication information from the mobile terminal 100 (S404). The mobile terminal 100 may obtain a user's bio information for the bio authentication by performing a bio authentication operation (S405). The mobile terminal 100 transmits the authentication information, obtained through the bio authentication operation, to the authentication server 200 (S406). The authentication server 200 may perform authentication by comparing the bio information received from the mobile terminal 100 with the user's authentication information stored in the authentication server 200 (S407). The authentication server 200 may transmit a result of the authentication to the payment server 300 (S408). The payment server 300 may request a payment token from the financial server 400 (S409). The financial server 400 may transmit the generated payment token to the payment server 300 (S410). The payment server 300 may transmit the payment token, received from the financial server 400, to the mobile terminal 100 (S411). The mobile terminal may perform a payment process (S412).

It may be seen that the above first payment mode is performed through data communication with the authentication server, the payment server, and the financial server connected over a network.

When the amount of remaining battery power of N% or less, that is, a threshold for entering the super-power saving mode, is detected (S421:Y), the mobile terminal 100 is recharged with a preset emergency fund from the financial server 400 (S423). A predetermined credit card (or payment account) may be recharged with the emergency fund.

After the emergency fund is recharged, the mobile terminal 100 enters the super-power saving payment mode (S425), and performs user authentication through the TEE authentication interface (S427). When user authentication is completed, the mobile terminal 100 may perform mobile payment in the state in which the battery has been off (S429).

The mobile terminal 100 monitors the amount of remaining battery power. If it is determined that the monitored amount of remaining battery power exceeds the predetermined threshold N% (S431), the mobile terminal may terminate the super-power saving payment mode (S433), and may refund the recharged amount (S435).

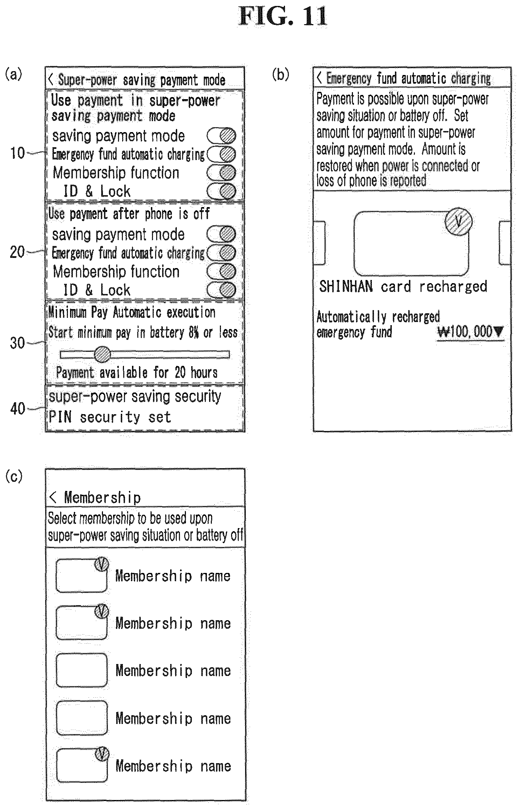

FIG. 11 is a diagram illustrating a setting method for performing payment in the minimum payment mode according to an embodiment of the present invention.

In accordance with an embodiment of the present invention, various functions for smoothly performing mobile payment in the super-power saving payment mode may be used. To this end, various functions available in the super-power saving payment mode may be previously set.

The super-power saving payment mode may include a situation in which the battery has been off. The super-power saving payment mode may be divided into a function available in the super-power saving payment mode and a function available in the situation in which the battery has been off. For example, the super-power saving payment mode may mean a case where the amount of remaining battery power is greater than 0% and is less than a threshold N% for entering the super-power saving payment mode. Furthermore, the case where the battery is off may mean a case where the amount of remaining battery power is 0%. That is, a menu available when the battery is off may be more limitative than that in the super-power saving payment mode.

Referring to FIG. 11(a), the controller 180 may provide a function setting menu 10 available in the super-power saving payment mode through a menu setting screen, a function setting menu 20 available when the battery is off, a menu 30 for setting the threshold of the amount of remaining battery power for entering the super-power saving payment mode, and a fin number setting menu 40 used for TEE authentication in the super-power saving payment mode.

A function available in the super-power saving payment mode and when the battery is off may include a transportation card, emergency fund automatic charging, a membership function, etc.

The threshold N% of the amount of remaining battery power for entering the super-power saving payment mode may be previously set through a specific interface (e.g., a scroll bar type and number entering). The controller 180 may control the mobile terminal so that it automatically enters the super-power saving payment mode when the amount of remaining battery power of less than a set threshold is detected although the set threshold exceeds a minimum amount of remaining battery power for maintaining a network connection.

The controller 180 may provide time information when mobile payment may be performed based on the amount of remaining battery power corresponding to a set threshold N%.

Referring to FIG. 11(b), when the mobile terminal enters the super-power saving payment mode, the controller 180 may display a screen in which card information (or account information) to be recharged with a specific amount and a recharged amount may be set on the display 151. A specific one of a plurality of previously registered cards may be selected.

Referring to FIG. 11(c), the controller 180 may display a screen in which at least one membership function belonging to a plurality of registered membership functions and available in the super-power saving payment mode may be selected on the display 151. In addition, the controller 180 may provide brightness and resolution of a screen, whether a network is available, and a menu in which an always on display (AOD) function is available in the super-power saving payment mode.

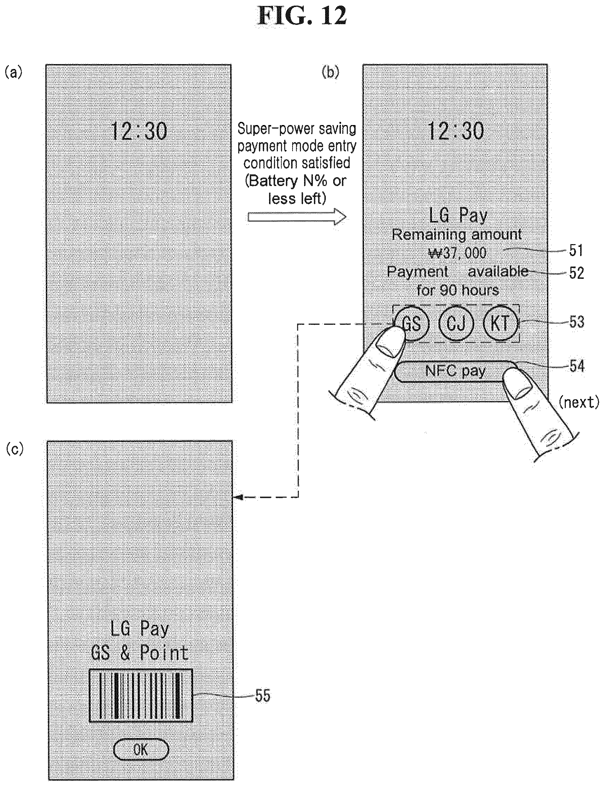

FIG. 12 is a diagram for illustrating an example of a screen configuration when the minimum payment mode is entered according to an embodiment of the present invention.

Referring to FIG. 12, if, as a result of the periodic monitoring of the amount of remaining battery power or a network connection state, it is determined that a predetermined super-power saving payment mode entry condition is satisfied, the controller 180 may display payment-related information on the AOD screen.

The payment-related information may include recharged amount information 51, time information 52 available for payment in the super-power saving payment mode, membership information 53, an NFC payment start menu 54. When a specific membership function is selected before payment is performed, the controller 180 may display barcode 55 corresponding to the selected membership on the AOD screen.

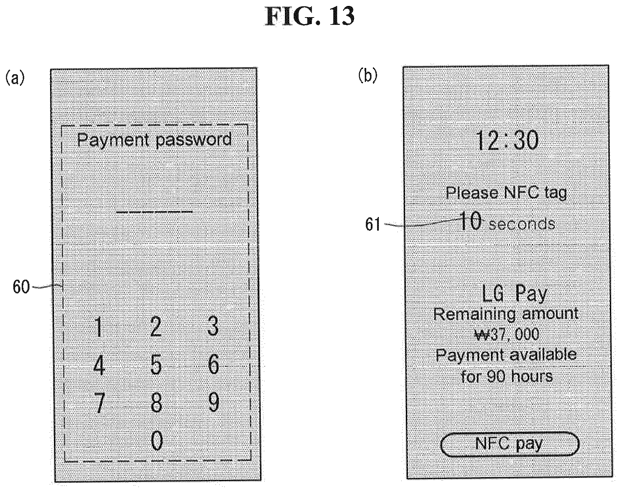

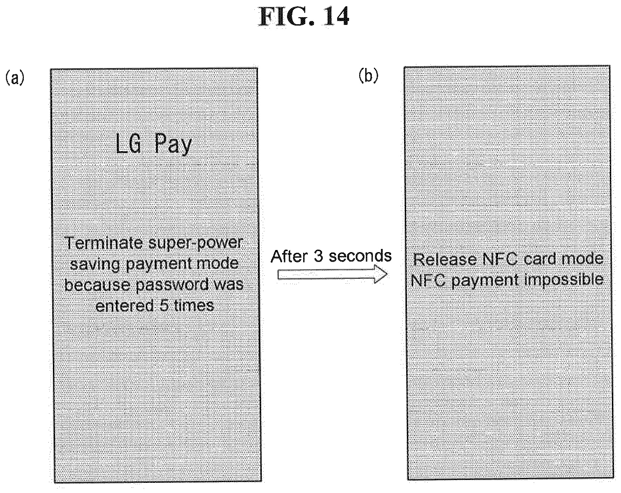

FIGS. 13 and 14 are diagrams for illustrating an example of an authentication interface provided in the TEE region in the minimum payment mode according to an embodiment of the present invention.

Referring to FIG. 13, the controller 180 may perform a user authentication process when an NFC payment function is activated in the super-power saving payment mode. The controller 180 may display a TEE authentication interface 60 on the display 151. The TEE authentication interface may include numeric keypads for entering a preset fin number. The controller 180 may activate the NFC payment function when TEE authentication is completed. If an NFC tag is not detected for a specific time 61 or more after the NFC payment function is activated, the controller 180 may terminate the super-power saving payment mode. The controller 180 may also terminate the super-power saving payment mode if TEE authentication is not performed for the specific time or more.

In accordance with an embodiment of the present invention, the super-power saving payment mode may be entered without recharging the battery because the mobile terminal 100 has been lost. In order to prevent unauthorized use upon loss or robbery, a TEE authentication number and a TEE authentication time may be limited.

Referring to FIG. 14, if an authentication failure number exceeds a predetermined number through the TEE authentication interface, the controller 180 may automatically terminate the super-power saving payment mode. Furthermore, the controller 180 may forcedly block the NFC card mode so that the NFC SE method used in the super-power saving payment mode is not applied.

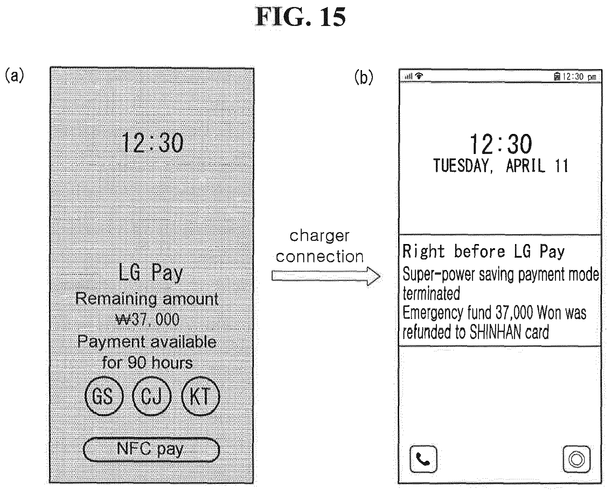

FIG. 15 is a diagram for illustrating an example of a screen configuration when the minimum payment mode is terminated according to an embodiment of the present invention.

Referring to FIG. 15, the controller 180 may sense that a recharger is connected while the mobile terminal operates in the super-power saving payment mode. When the recharger is connected, the controller 180 may terminate the super-power saving payment mode and perform refund processing on a recharged amount. For example, when the mobile terminal 100 enters the super-power saving payment mode in the state in which the mobile terminal has been lost, in order to prevent unauthorized use of a recharged amount, the controller 180 may perform control so that the recharged amount is automatically refunded although a recharger is connected to the mobile terminal. If a recharged amount is refunded, the controller 180 may display a message, indicating that refund processing has been performed, on the display 151.

When the super-power saving payment mode release condition (e.g., battery recharging or mobile terminal rebooting) is satisfied, the controller 180 may perform refund processing on a recharged amount although the mobile terminal is not temporarily connected to a network.

A history used for payment in the super-power saving payment mode in the state in which a network has not been connected may be subjected to deferred payment.

In the aforementioned embodiments, an example in which the super-power saving payment mode is automatically entered when the amount of remaining battery power of the mobile terminal is a preset threshold or less has been described, but the present invention is not limited to the example. For example, the super-power saving payment mode may be applied regardless of the amount of remaining battery power and/or a network connection state.

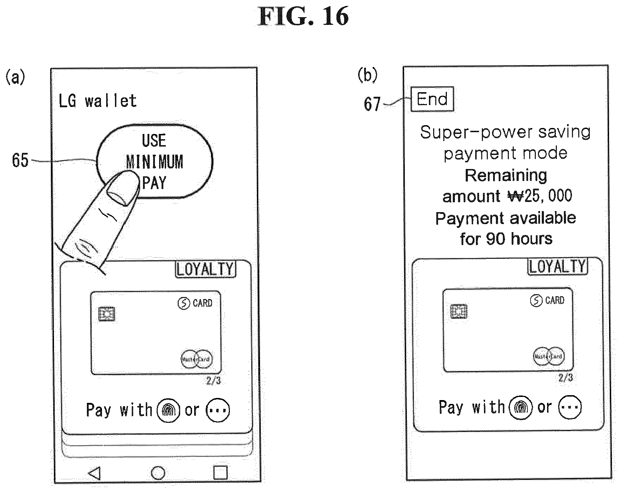

FIG. 16 is a diagram for illustrating another example in which the first payment mode and the second payment mode (minimum payment mode) are switched according to an embodiment of the present invention.

Referring to FIG. 16, when the payment app is executed (e.g., a quick pay function), the controller 180 may display a previously registered virtual credit card image on the display 151, and may also provide a menu 65 for entering the super-power saving payment mode. When the menu 65 is selected, the super-power saving payment mode may be executed although the aforementioned condition is not satisfied. In this case, the controller 180 may display an end button 67 on the super-power saving payment mode entry screen, and may perform control so that the super-power saving payment mode is terminated through the end button 67. That is, although the amount of remaining battery power and a network connection state are excellent, if mobile payment is to be performed more safely using the NFC SE method, there is an advantage in that the NFC payment method can be selectively applied manually through a user manipulation.

Various embodiments may be implemented using a machine-readable medium having instructions stored thereon for execution by a processor to perform various methods presented herein. Examples of possible machine-readable mediums include HDD (Hard Disk Drive), SSD (Solid State Disk), SDD (Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

The foregoing embodiments are merely exemplary and are not to be considered as limiting the present disclosure. The present teachings can be readily applied to other types of methods and apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds, are therefore intended to be embraced by the appended claims.

## Claims

1. A mobile terminal (100), comprising:
a display (151);
a power supply unit (190);
a communication unit (110) configured to access a payment server over a network;
a near field communication NFC module (800);
a payment information storage unit configured to store payment-related information and to perform communication with a payment terminal through the NFC module (800); and
a controller (180) configured to selectively apply a first payment mode in which payment is performed through communication with the payment server or a second payment mode in which the payment is performed based on the payment-related information stored in the payment information storage unit,
wherein the controller (180) is configured to enter the second payment mode when a state in which an amount of remaining battery power of the power supply unit is a predetermined threshold or less and/or a state in which the network has not been connected is detected, wherein the controller (180) enables an amount available in the second payment mode to be automatically recharged through predetermined charging means before the second payment mode is entered.

2. The mobile terminal of claim 1, further comprising a trusted execution environment TEE processor configured to be different from the controller (180) and to provide an authentication interface for local authentication,
wherein the controller (180) performs authentication through the authentication interface provided by the TEE processor when the second payment mode is entered.

3. The mobile terminal of claim 2, wherein the controller is configured to change an authentication method from an authentication method through a fast identity online FIDO server to an authentication method through the authentication interface provided by the TEE processor when the first payment mode switches to the second payment mode.

4. The mobile terminal of claim 2, wherein the authentication interface comprises a region in which a preset fin number is entered,
wherein the controller (180) is configured to terminate the second payment mode when an authentication error attributable to misspelling of the preset fin number exceeds a predetermined number.

5. The mobile terminal of claim 1, wherein the state in which the amount of remaining battery power is the predetermined value or less comprises a state in which power supplied to the mobile terminal through the power supply unit is off.

6. The mobile terminal of claim 1, wherein the controller (180) is configured to:
perform control so that the mobile terminal operates in an always on display (AOD) mode in which specific information is displayed on the display (151) in a state in which power has not been supplied to the display, and
perform control so that information comprising the recharged amount in the second payment mode is displayed on the display (151) in the AOD mode,
wherein the information displayed in the AOD mode further comprises a time during which payment is possible using a current amount of remaining battery power and membership information related to a predetermined credit card.

7. The mobile terminal of claim 1, wherein the controller (180) is configured to perform control so that the amount is recharged prior to a release of the connection of the network before the second payment mode is entered.

8. The mobile terminal of claim 1, wherein the controller (180) is configured to terminate the second payment mode when the amount of remaining battery power exceeds the threshold in the state in which the second payment mode has been entered.

9. The mobile terminal of claim 7, wherein the controller (180) is configured to refund the recharged amount to the predetermined charging means when the second payment mode is terminated.

10. The mobile terminal of claim 8, wherein the controller (180) is configured to refund an amount of the recharged amount except a payment amount to the recharging means when the second payment mode is terminated in a state in which payment has been performed using the recharged amount in the second payment mode.

11. The mobile terminal of claim 8, wherein the controller (180) is configured to perform control so that the payment using the recharged amount is blocked when the second payment mode is terminated.

12. The mobile terminal of claim 1, wherein the payment information storage unit is included in a USIM card or a micro SD card and provided in a form detachable from the mobile terminal or a form embedded in the mobile terminal,
and/or wherein the display (151) is implemented as a plastic OLED, POLED.

13. The mobile terminal of claim 1, wherein:
the first payment mode comprises a payment mode based on an NFC host card emulator HCE method or a magnetic secure transmission MST method, and
the second payment mode comprises a payment mode based on an NFC secure element SE method.

14. The mobile terminal of claim 1, wherein when a second payment mode menu is selected while the mobile terminal operates in the first payment mode, the controller (180) is configured to perform control so that the second payment mode is entered regardless of the state of the amount of remaining battery power and the connection state of the network.

15. The mobile terminal of claim 1, wherein the payment-related information stored in the payment information storage unit comprises payment app information and credit card information to be applied to payment in the second payment mode.
